# EUROPÄISCHE PATENTSCHRIFT

(11) **EP 2 475 907 B1**
(45) Veröffentlichungstag und Bekanntmachung des Hinweises auf die Patenterteilung: **09.03.2016**
(21) Anmeldenummer: 10751581.9
(22) Anmeldetag: 03.09.2010
(51) Int. Cl.: F16D 23/06

(54) **SYNCHRONISIERUNG FÜR EIN SCHALTGETRIEBE**
SYNCHRONIZATION SYSTEM FOR A GEARBOX
SYNCHRONISATION POUR UNE BOÎTE DE VITESSES

(30) Priorität: 08.09.2009 DE 102009040541
(43) Veröffentlichungstag der Anmeldung: 18.07.2012
(73) Patentinhaber: Hoerbiger Antriebstechnik Holding GmbH, 86956 Schongau (DE)
(72) Erfinder: BINDER, Jürgen, 88367 Hohentengen (DE); ECHTLER, Peter, 86972 Bernbeuren (DE); FÜRGUTH, Werner, 87640 Biessenhofen / Altdorf (DE); KRAMER, Peter, 87784 Westerheim (DE); PRINKE, Stefan, 86971 Peiting (DE); SIELAFF, Tilo, 64295 Darmstadt (DE); WEIHER, Christian, 86983 Lechbruck (DE); MÜLLER, Philip, 74532 Ilshofen (DE)
(74) Vertreter: Prinz & Partner mbB
(86) Internationale Anmeldenummer: PCT/EP2010/005430
(87) Internationale Veröffentlichungsnummer: WO 2011/029557

(56) Entgegenhaltungen:
- EP-A1- 0 668 457
- DE-B- 1 042 978
- GB-A- 733 745
- US-A- 4 475 639
- US-A- 4 540 074
- US-A- 4 566 569

## Beschreibung

Die Erfindung betrifft eine Synchronisierung für ein Schaltgetriebe gemäß dem Oberbegriff des Anspruchs 1.

Eine solche Synchronisierung ist aus der US 4 475 639 bekannt, bei der ein drehfest auf einer Getriebewelle angeordneter Synchronkörper vorgesehen ist, auf dem eine Schaltmuffe axial verschiebbar gelagert ist und die einen Sperrhebel aufweist, der sich an dem Synchronkörper abstützt. Wenn ein Gang geschaltet werden soll, werden die Synchronringe von der Schaltmuffe gegen eine Reibfläche gedrückt, die dem zu schaltenden Gangrad zugeordnet ist. Durch den entstehenden Reibschluss verdreht sich der Synchronring relativ zur Schaltmuffe und übt eine Kraft in Umfangsrichtung auf den Sperrhebel aus. Dieser wird dadurch in eine Sperrstellung gebracht, die es der Schaltmuffe nicht erlaubt durchgeschaltet zu werden. Erst wenn die Drehzahl des Gangrades an die Drehzahl des Synchronkörpers angeglichen ist und daher kein Drehmoment auf den Synchronring mehr einwirkt, gelingt es der Schaltmuffe den Sperrhebel so zu bewegen, dass dieser einem Durchschalten nicht mehr im Wege steht.

Diese bekannte Synchronisierung ist vergleichsweise aufwendig in der Herstellung, da sie aus einer Vielzahl an verschiedenen, teilweise schwierig zu fertigenden Bauteilen besteht. Die Aufgabe der Erfindung besteht darin, eine Synchronisierung zu schaffen, die sich durch geringere Herstellungskosten, eine zuverlässige Funktionsweise und einen hohen Schaltkomfort auszeichnet.

Zur Lösung dieser Aufgabe ist erfindungsgemäß bei einer Synchronisierung der eingangs genannten Art vorgesehen, dass der Sperrhebel mit mindestens einer Sperrfläche versehen ist, die eine im wesentlichen in radialer Richtung wirkende Sperrkraft erzeugen kann. Die Erfindung beruht auf dem Grundgedanken, dass während des Angleichs der Drehzahl des Gangrades an die Drehzahl des Synchronkörpers wirkende Drehmoment unmittelbar in eine Sperrwirkung umzusetzen, nämlich mittels der Sperrfläche am Sperrhebel. Dadurch kann ein technisch einfacher Aufbau erhalten werden.

Vorzugsweise ist vorgesehen, dass die Sperrfläche schräg zur Umfangsrichtung ausgerichtet ist. Dies ermöglicht, die Sperrfläche in technisch einfacher Weise mittels eines Mitnehmers zu übertragen, der an einem Synchronring angebracht ist.

Gemäß einer Ausführungsform der Erfindung ist vorgesehen, dass das in die Schaltmuffe eingreifende Ende des Sperrhebels radial einwärts verschiebbar ist. Bei dieser Ausgestaltung "taucht" das in die Schaltmuffe eingreifende Ende des Sperrhebels nach unten ab, wenn die Schaltmuffe nicht weiter gesperrt wird, sondern durchgeschaltet wird. Dies ermöglicht es, den Sperrhebel in allen Betriebszuständen in einer radial ausgerichteten oder geringfügig seitlich verschwenkten Position zu halten; eine übermäßig starke Kippbewegung des Sperrhebels ist nicht nötig.

Vorzugsweise ist vorgesehen, dass die Sperrfläche in radialer Richtung einwärts verschiebbar ist, wenn keine Sperrkraft wirkt. Bei dieser Ausgestaltung wird die Sperrwirkung unmittelbar von der Sperrfläche erzeugt, ohne dass andere, dazwischenliegende Bauteile nötig sind.

Gemäß einer Ausführung der Erfindung ist vorgesehen, dass der Sperrhebel ein Basisteil, ein Kopfteil und eine dazwischen angeordnete Sperrhebel-Feder aufweist, die versucht, Basisteil und Kopfteil auseinanderzudrücken. Der Sperrhebel ist bei dieser Ausführungsform als kompakte Baueinheit ausgeführt, die vormontiert sein kann.

Dabei kann vorgesehen sein, dass das Kopfteil auf dem Basisteil geführt ist. Dies erhöht die Präzision und verringert unerwünschte Vibrationsgeräusche.

Vorzugsweise ist die Sperrfläche am Kopfteil vorgesehen. Auch bei dieser Ausgestaltung werden keine Zwischenelemente benötigt, um die in Umfangsrichtung wirkende Sperrkraft unmittelbar in eine Sperrwirkung umzusetzen, die der Sperrhebel der Schaltmuffe entgegensetzt.

Gemäß einer alternativen Ausführungsform ist vorgesehen, dass der Sperrhebel einen Sperrbolzen und einen Sperrschlitten aufweist, wobei die Sperrfläche an dem Sperrbolzen vorgesehen ist. Bei dieser Ausgestaltung kann ein sehr kompakter Sperrbolzen verwendet werden, der aufgrund seiner Geometrie mit geringem Aufwand gehärtet werden kann.

Vorzugsweise ist vorgesehen, dass der Sperrbolzen sich durch eine Aussparung im Sperrschlitten hindurch erstreckt. Dies gewährleistet, dass der Sperrschlitten unmittelbar am Sperrbolzen geführt ist.

Dabei kann vorgesehen sein, dass der Sperrbolzen einen Fuß aufweist, der in radialer Richtung verschiebbar in dem Synchronkörper aufgenommen ist, wobei eine Feder vorgesehen ist, die den Fuß in radialer Richtung nach außen beaufschlagt. Auf diese Weise ist der Fuß des Sperrbolzens sehr präzise im Synchronkörper geführt.

Gemäß einer alternativen Ausführungsform ist vorgesehen, dass der Sperrhebel als einstückige Federklammer ausgebildet ist, die zwei einander gegenüberliegende Klemmflächen aufweist, die sich am Synchronkörper abstützen. Bei dieser Ausführungsform ist der Sperrhebel einstückig ausgeführt, wobei er gleichzeitig aufgrund seiner Eigenelastizität die Federkraft bereitstellt, die ihn gegen die Schaltmuffe beaufschlagt. Hieraus resultiert eine sehr geringe Anzahl an Einzelteilen.

Vorzugsweise ist dabei vorgesehen, dass sich die Klemmflächen an einem Steg abstützen, der am Synchronkörper vorgesehen ist. Der Steg dient dazu, die Klemmflächen zu spreizen, wenn die Federklammer von der Schaltmuffe radial einwärts beaufschlagt wird. Auf diese Weise wird automatisch eine Rückstellwirkung erzeugt.

Vorzugsweise weist die Federklammer einen Biegeabschnitt auf, der mit der Schaltmuffe zusammenwirkt. Der bereits aufgrund seiner Herstellung mit einem Radius versehene Biegeabschnitt ist ohne weitere Nachbearbeitung dafür geeignet, sich an der Schaltmuffe abzustützen und die im Betrieb erforderlichen Kippbewegungen auszuführen.

Vorzugsweise ist mindestens ein Synchronring vorgesehen, der mit mindestens einem Mitnehmer versehen ist, der eine in Umfangsrichtung wirkende Sperrkraft bereitstellen kann. Der Mitnehmer ermöglicht es, das während des Drehzahlangleichs wirkende Drehmoment unmittelbar in eine in Umfangsrichtung wirkende Sperrkraft umzustellen.

Vorzugsweise sind dabei zwei Mitnehmer vorgesehen, die einander in Umfangsrichtung gegenüberliegend auf der einen und der anderen Seite des Sperrhebels angeordnet sind. Dies gewährleistet, dass die Synchronisierung in beiden Drehrichtungen wirksam ist.

Vorzugsweise sind weiterhin zwei Synchronringe vorgesehen, die einander in axialer Richtung gegenüberliegend auf der einen und der anderen Seite des Synchronkörpers angeordnet sind. Dies ermöglicht, mit einem einzigen Synchronkörper zwei Gänge zu schalten.

Die Erfindung wird nachfolgend anhand verschiedener Ausführungsformen beschrieben, die in den beigefügten Zeichnungen dargestellt sind. In diesen zeigen:
- Figur 1 in einer Explosionsansicht eine Synchronisierung gemäß einer ersten Ausführungsform der Erfindung;
- Figur 2 in einem Längsschnitt die Synchronisierung von Figur 1 im Ausgangszustand;
- Figur 3 einen Querschnitt durch die Synchronisierung von Figur 1;
- Figur 4 in vergrößertem Maßstab einen Ausschnitt von Figur 3;
- Figur 5 in einem Teilschnitt die Synchronisierung von Figur 1 während eines Drehzahlangleichs;
- Figur 6 eine schematische Darstellung zur Erläuterung der wirkenden Sperrkräfte;
- Figur 7 in einem Schnitt entsprechend Figur 3 die Synchronisierung im durchgeschalteten Zustand;
- Figur 8 in einem Schnitt eine Synchronisierung gemäß einer zweiten Ausführungsform im Ausgangszustand;
- Figur 9 in einer perspektivischen Ansicht den bei der zweiten Ausführungsform verwendeten Sperrhebel;
- Figur 10 in einem vergrößerten Querschnitt die Synchronisierung gemäß der zweiten Ausführungsform;
- Figur 11 in einem Schnitt eine Synchronisierung gemäß einer dritten Ausführungsform;
- Figur 12 in einer perspektivischen Ansicht den bei der dritten Ausführungsform verwendeten Sperrhebel;
- Figur 13 in einem vergrößerten Querschnitt die Synchronisierung gemäß der dritten Ausführungsform;
- Figur 14 in einem Schnitt eine Synchronisierung gemäß einer vierten Ausführungsform;
- Figur 15 in einer perspektivischen Ansicht den bei der vierten Ausführungsform verwendeten Sperrhebel; und
- Figur 16 in einem vergrößerten Querschnitt die Synchronisierung gemäß der vierten Ausführungsform.

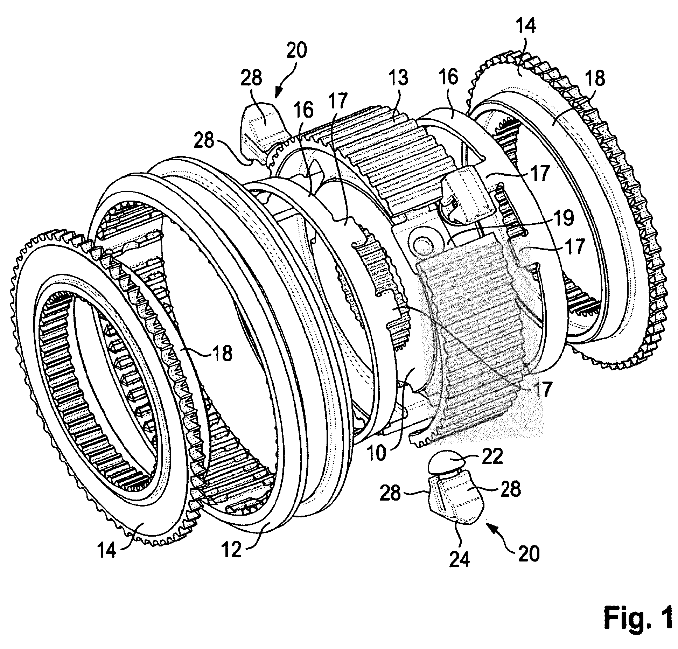

In den Figuren 1 bis 7 ist eine Synchronisierung gemäß einer ersten Ausführungsform gezeigt. Diese enthält einen Synchronkörper 10, der drehfest auf einer (nicht dargestellten) Getriebewelle eines Schaltgetriebes, insbesondere für ein Kraftfahrzeug, angebracht ist. Beim gezeigten Ausführungsbeispiel weist der Synchronkörper 10 eine Innenöffnung auf, die mit einer Wellenverzahnung 11 versehen ist, um die drehfeste Verbindung mit der Getriebewelle herzustellen.

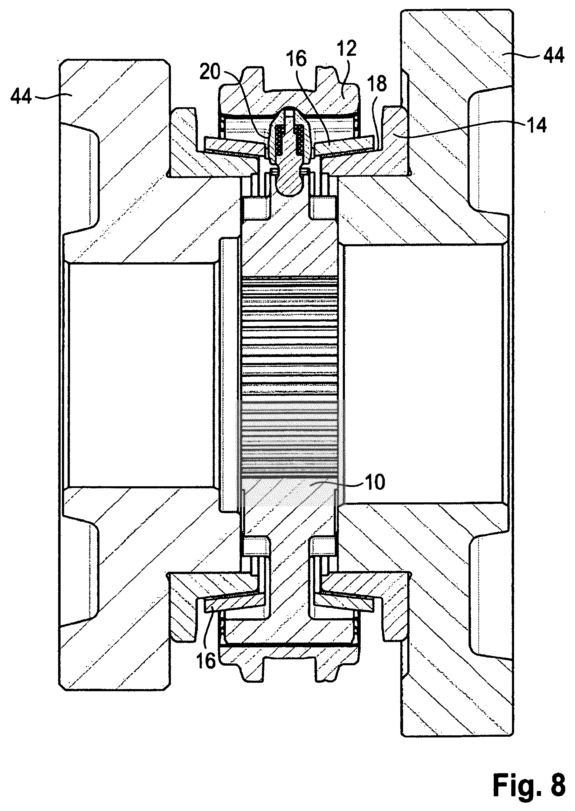

Auf seinem Außenumfang ist der Synchronkörper 10 mit einer Verzahnung 13 versehen, auf der in axialer Richtung verschiebbar, jedoch in Umfangsrichtung unverdrehbar eine Schaltmuffe 12 angeordnet ist. Die Schaltmuffe ist ringförmig ausgeführt und weist auf ihrer Innenfläche eine Verzahnung auf, die komplementär zur Verzahnung 13 des Synchronkörpers 10 ist. Auf jeder Seite des Synchronkörpers 10 ist auf der Getriebewelle drehbar ein Gangrad 44 (siehe Figur 8) angeordnet, das jeweils mit einem Koppelring 14 versehen ist. Jeder Koppelring 14 weist auf seinem Außenumfang eine Verzahnung auf, die hinsichtlich Geometrie und Abmessungen auf die Verzahnung 13 des Synchronkörpers 10 abgestimmt ist. Somit kann, wenn die Schaltmuffe 12 in axialer Richtung ausreichend weit verschoben wird, eine mechanische Kopplung zwischen dem Koppelring 14 (und damit dem entsprechenden Gangrad) und dem Synchronkörper 10 erzielt werden.

An jeder axialen Seite des Synchronkörpers 10 ist jeweils ein Synchron- oder Reibring 16 angeordnet, der jeweils mit mehreren Mitnehmern 17 versehen ist, die in geeignete Aussparungen des Synchronkörpers 10 eingreifen. Innerhalb dieser Aussparungen im Synchronkörper 10 können sich die Mitnehmer 17 des Reibrings in Umfangsrichtung um einen bestimmten Winkelbereich verdrehen. Der Synchronring 16 kann in Reibeingriff mit einer Reibfläche 18 gebracht werden, die am Koppelring 14 vorgesehen ist. Entsprechend den Anforderungen an den Reibeingriff kann die Innenfläche des Synchronrings 16 mit einem Reibbelag versehen sein. Es ist auch möglich, mehrflächige Reibsysteme zu verwenden, indem Zusatzringe eingesetzt werden.

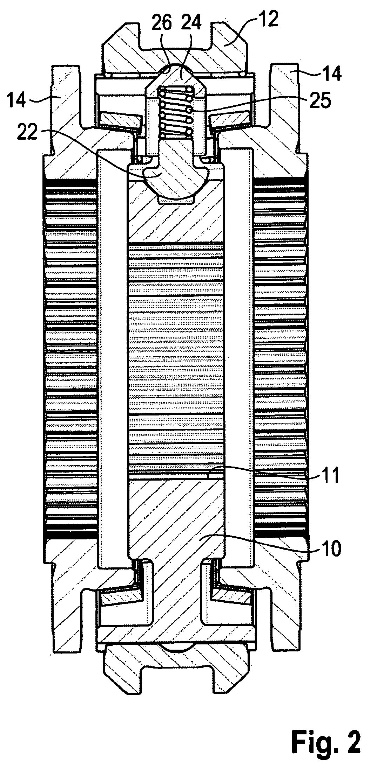

Der Synchronkörper 10 ist mit drei Aufnahmen 19 versehen, die in Umfangsrichtung gleichmäßig voneinander beabstandet sind. In jeder Aufnahme 19 ist ein Sperrhebel 20 angeordnet, der hier aus einem Basisteil 22, einem Kopfteil 24 und einer dazwischen angeordneten Sperrhebel-Feder 25 besteht. Die Sperrhebel-Feder 25 versucht, Basisteil und Kopfteil auseinanderzudrücken. Das Kopfteil 24 ist ballig ausgeführt und greift in eine konkave Ausnehmung 26 auf der Innenfläche der Schaltmuffe 12 ein (siehe Figur 2), während sich das Basisteil 22 am Boden der Aufnahme 19 abstützt. Das Basisteil 22 ist zu diesem Zweck halbkugelförmig ausgeführt (siehe insbesondere Figur 1), während das Kopfteil 24 ballig ausgeführt ist. In der in Figur 2 gezeigten Ausgangsstellung ist der Sperrhebel 20 radial angeordnet, sodass die von der Sperrhebel-Feder 25 ausgeübte Kraft keinerlei Kraft in axialer Richtung auf die Schaltmuffe 12 ausübt.

Alternativ zur Ausführung mit balligem Kopfteil und konkaver Ausnehmung sind auch andere geometrische Ausführungen für den Sperrhebel denkbar, beispielsweise mit rundem Kopfteil oder Kopfteil mit Fase und jeweils komplementärer Ausgestaltung der Schaltmuffe.

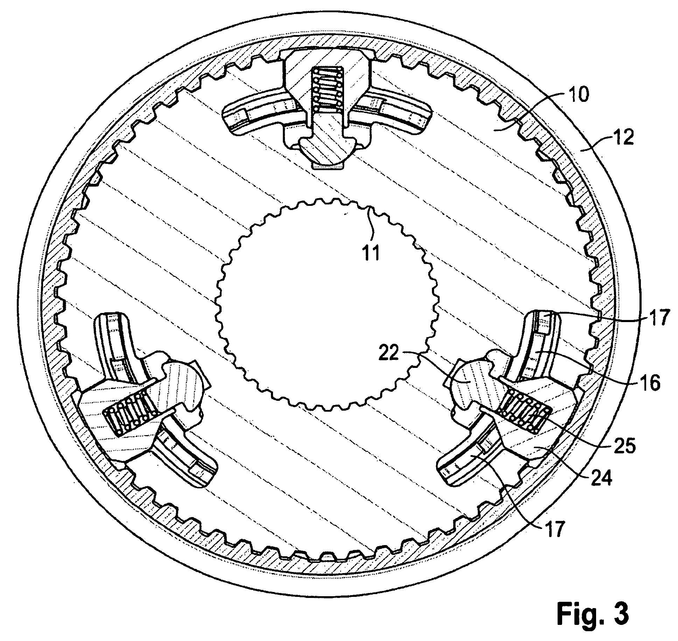

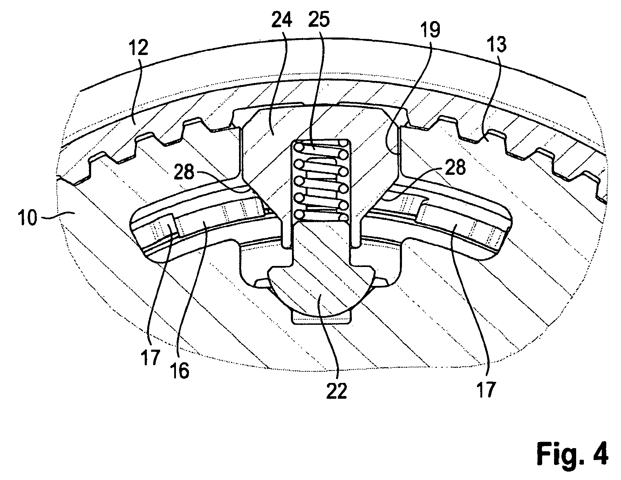

Jeder Sperrhebel 20 ist so in die Aufnahme 19 im Synchronkörper 10 eingesetzt, dass in Umfangsrichtung gesehen vor und hinter ihm jeweils ein Mitnehmer 17 des Synchronrings 16 angeordnet ist. Im Bereich des Radius, auf dem sich die Mitnehmer 17 befinden, ist das Kopfteil 24 jedes Sperrhebels mit schräg zur Umfangsrichtung verlaufenden Sperrflächen 28 versehen (siehe insbesondere die Figuren 3 und 4).

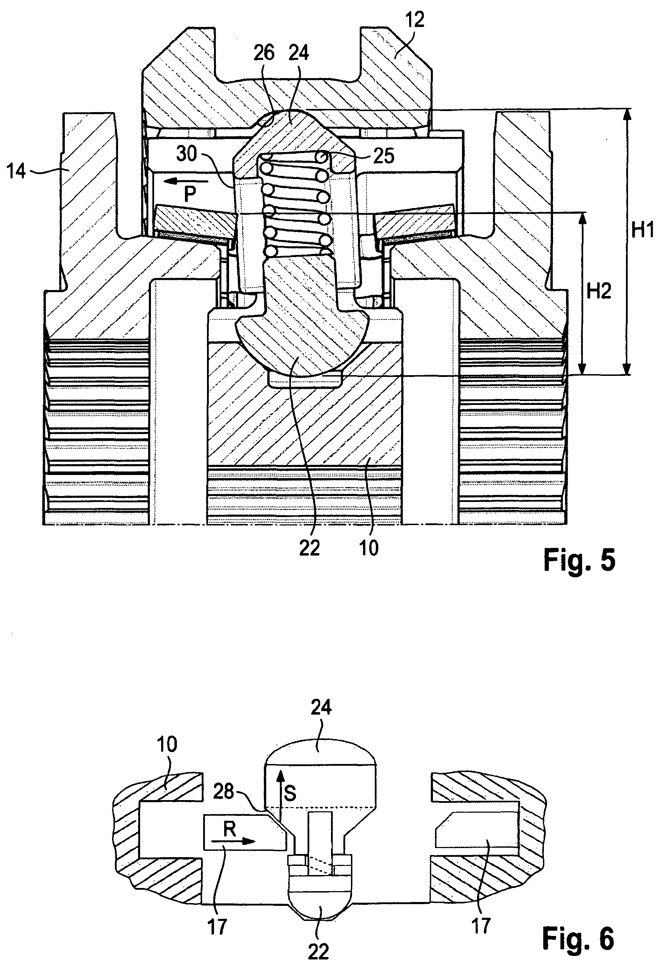

Um einen Gang zu schalten, wird die Schaltmuffe 12 durch eine (nicht dargestellte) Schaltgabel in axialer Richtung verschoben. Hierdurch gelangt sie ausgehend von der in Figur 2 gezeigten Neutralstellung in die in Figur 5 gezeigte Zwischenstellung, in der sie aufgrund des Eingriffs des Kopfteils 24 in die Ausnehmung 26 den Sperrhebel 20 zur Seite kippt. Bei dieser Kippbewegung gelangt eine Seitenfläche 30 des Kopfteils 24 des Sperrhebels 20 in Anlage an dem Umfangsrand des Synchronrings 16 zwischen zwei Mitnehmern 17, wodurch der Synchronring 16 in axialer Richtung verschoben wird, bezogen auf Figur 5 also nach links in der Richtung des Pfeils P. Auf diese Weise gelangt der Synchronring 16 in Reibeingriff mit der Reibfläche 18 des Koppelrings 14.

Die in axialer Richtung wirkende Andruckkraft wird dabei aufgrund der Hebelverhältnisse verstärkt; der Hebelarm H1, an dem die axiale Kraft der Schaltmuffe 12 wirkt, ist größer als der Hebelarm H2, über den diese Kraft in den Synchronring 16 eingeleitet wird. Ferner liefert nun, da der Sperrhebel 20 schräg steht, auch die Sperrhebel-Feder 25 einen in axialer Richtung wirkenden Beitrag, der auf die Schaltmuffe 12 einwirkt.

Üblicherweise haben während des Betriebs des Schaltgetriebes die Getriebewelle und das dem entsprechenden Koppelring 14 zugeordnete Gangrad nicht dieselbe Drehzahl, sodass auf den Synchronring 16 ein Reibmoment ausgeübt wird. Dies führt dazu, dass sich der Synchronring 16 in Umfangsrichtung verdreht, bis der entsprechende Mitnehmer 17 an einer der Sperrflächen 28 des Sperrhebels 20 anliegt (siehe Figur 6). Die aus dem Reibmoment resultierende Umfangskraft R wird von dem auf die Sperrfläche 28 einwirkenden Mitnehmer 17 in eine Sperrkraft S umgesetzt. Die Sperrkraft S wirkt im wesentlichen in radialer Richtung; die geringe Abweichung von der exakt radialer Richtung, resultierend aus der Schrägstellung des Sperrhebels in diesem Zustand, ist vernachlässigbar und unterstützt im übrigen die axiale Andruckkraft der Schaltmuffe. Von der Sperrkraft S wird das Kopfteil 24 in radialer Richtung nach außen in die Ausnehmung 26 gedrückt, während der sich an der Reibfläche 18 abstützende Synchronring 16 verhindert, dass der Sperrhebel weiter nach außen gekippt werden kann. Auf diese Weise ist die Schaltmuffe 12 in der in Figur 5 gezeigten Position blockiert, solange ein Reibmoment, resultierend aus einer Drehzahldifferenz zwischen der Getriebewelle und dem zu schaltenden Gangrad, gegeben ist. Die Schaltmuffe 12 kann also nicht durchgeschaltet werden.

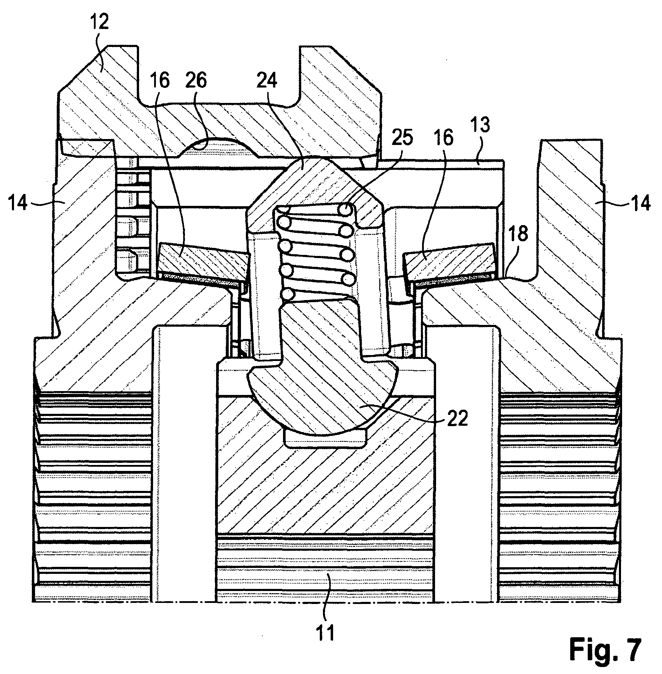

Erst wenn die Drehzahl des Gangrades sich an die Drehzahl des Synchronkörpers 10 angeglichen hat, wird kein Reibmoment mehr auf den Synchronring 16 ausgeübt, sodass die Reibkraft R entfällt. Dann gelingt es der Schaltmuffe 12 mittels der schräg verlaufenden Ausnehmung 26, das Kopfteil 24 des Sperrhebels 20 nach unten zu drücken, wodurch der Synchronring 16 von der Sperrfläche 28 über die Mitnehmer 17 geringfügig zurückgedreht wird. Der entsprechende Mitnehmer 17 gibt also die Sperrfläche 28 frei, so dass das Kopfteil 24 nach unten wegtauchen kann. Die Schaltmuffe 12 ist dadurch freigegeben, so dass sie in einen vollständig durchgeschalteten Zustand verschoben werden kann (siehe Figur 7), in welchem eine drehfeste Verbindung zwischen dem Synchronkörper 10 und dem Koppelring 14 hergestellt ist.

Wenn die Verbindung wieder gelöst werden soll, wird die Schaltmuffe 12 in axialer Richtung zur Mitte des Synchronkörpers 10 zurückverschoben, wodurch das Kopfteil 24 wieder in die Ausnehmung 26 der Schaltmuffe 12 gelangt.

Der Vorteil der ersten Ausführungsform besteht in einem einfachen und kostengünstigen Aufbau. Weiterhin ist eine große axiale Kraftverstärkung realisierbar, was sich besonders positiv auf die notwendige Gesamtschaltkraft auswirkt. Auch der Synchronring ist vereinfacht, da er im Vergleich zu einer BorgWarner-Synchronisierung keine Sperrverzahnung benötigt.

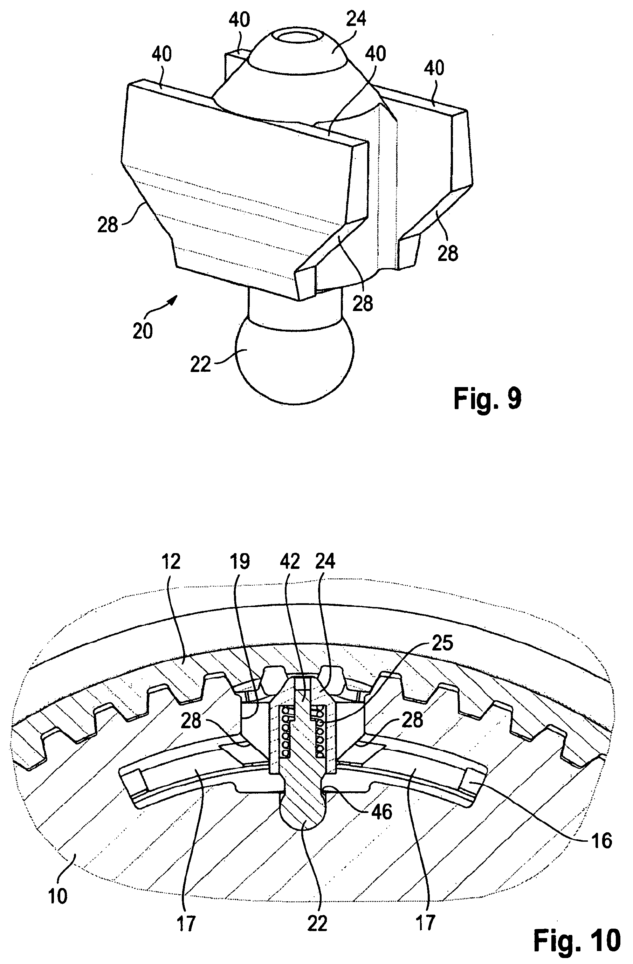

In den Figuren 8 bis 10 ist eine zweite Ausführungsform gezeigt. Für die von der ersten Ausführungsform bekannten Bauteile werden dieselben Bezugszeichen verwendet, und es wird insoweit auf die obigen Erläuterungen verwiesen.

Die Funktionsweise der zweiten Ausführungsform entspricht grundsätzlich derjenigen der ersten Ausführungsform. Der Unterschied zwischen der ersten Ausführungsform und der zweiten Ausführungsform besteht in der Ausgestaltung des Sperrhebels 20 und der Anbringung des Basisteils 22 im Synchronkörper 10.

Bei der zweiten Ausführungsform sind die Sperrflächen 28 an seitlichen Flügeln 40 vorgesehen, die in Umfangsrichtung über das Kopfteil 24 hervorstehen. Die in Umfangsrichtung vorne bzw. hinten liegenden Ränder der Flügel 40 stützen sich an den Rändern der Aufnahme 19 ab. Das Kopfteil 24 ist auf dem Basisteil 22 (zusätzlich zu seiner Führung am unteren Rand, wie sie auch bereits von der ersten Ausführungsform bekannt ist) auf einem Zapfen 42 geführt, der in eine mittige Öffnung des Kopfteils 24 eingreift. Der Zapfen 42 dient auch als Führung für die Sperrhebel-Feder 25.

Das Basisteil 22 ist bei der zweiten Ausführungsform in eine vertieft ausgeführte Aufnahme 46 im Synchronkörper 10 eingesetzt, in der es nach Art eines Kugelgelenks schwenkbar ist.

Auch bei dieser Ausführungsform erzeugen die Mitnehmer 17, wenn der Synchronring 16 in Umfangsrichtung gedreht wird, durch die Anlage an den schräg ausgerichteten Sperrflächen 28 eine in radialer Richtung ausgerichtete Sperrkraft S, die das Kopfteil 24 des Sperrhebels 20 nach außen drückt. Hinsichtlich der Hebelverhältnisse beim Schalten ergeben sich dieselben Vorteile wie bei der ersten Ausführungsform. Weitere Vorteile sind, dass auch bei der zweiten Ausführungsform die Anzahl der Einzelteile gering ist. Der Sperrhebel 20 kann, da er nicht an den Synchronkörper 10 oder die Schaltmuffe 12 angepasst werden muss, universell eingesetzt werden. Außerdem kann der Sperrhebel 20 als solcher vormontiert werden, sodass die Synchronisierung insgesamt sehr einfach montiert werden kann. Weiterhin benötigt der Sperrhebel, in gleicher Weise wie bei der ersten Ausführungsform, nur einen sehr geringen axialen und radialen Bauraum. Außerdem müssen an einer herkömmlichen Schaltmuffe nur sehr geringe Änderungen vorgenommen werden, um die mit der zweiten (und auch der ersten) Ausführungsform erzielbare Verstärkungswirkung nutzen zu können.

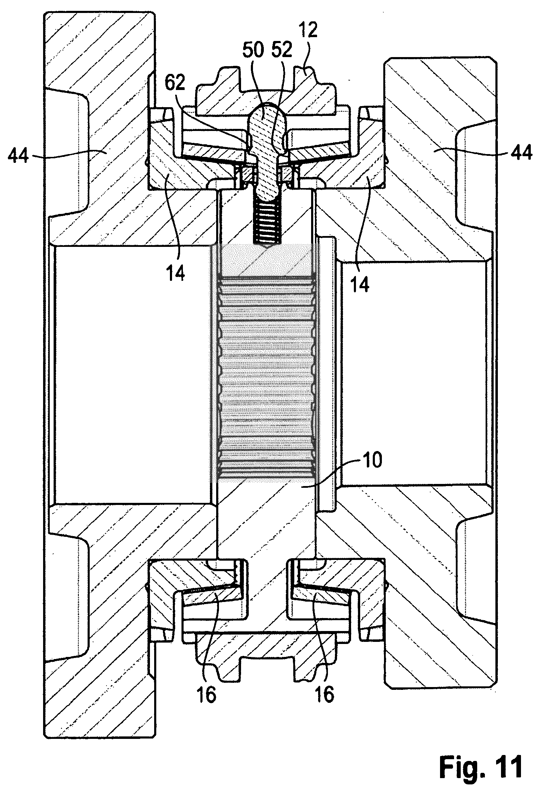

In den Figuren 11 bis 13 ist eine dritte Ausführungsform gezeigt. Für die von der ersten oder der zweiten Ausführungsform bekannten Bauteile werden dieselben Bezugszeichen verwendet, und es wird insoweit auf die obigen Erläuterungen verwiesen.

Bei der dritten Ausführungsform weist der Sperrhebel 20 einen Sperrbolzen 50 und einen Sperrschlitten 52 auf. Der Sperrbolzen 50 ist einstückig ausgeführt und greift mit seinem Kopfabschnitt in die Ausnehmung 26 der Schaltmuffe 12 ein, während sein Fußabschnitt in einer Bohrung 54 im Synchronkörper 10 so aufgenommen ist, dass er nach Art eines Kugelgelenks dort kippen kann. Zwischen dem Fußabschnitt des Sperrbolzens 50 und dem Boden der Bohrung 54 ist die Sperrhebel-Feder 25 angeordnet, sodass sie den Sperrbolzen 50 in radialer Richtung nach außen beaufschlagt. In Umfangsrichtung ist der Kopfabschnitt des Sperrbolzens 50 zwischen einander gegenüberliegenden Rändern der Aufnahme 19 geführt.

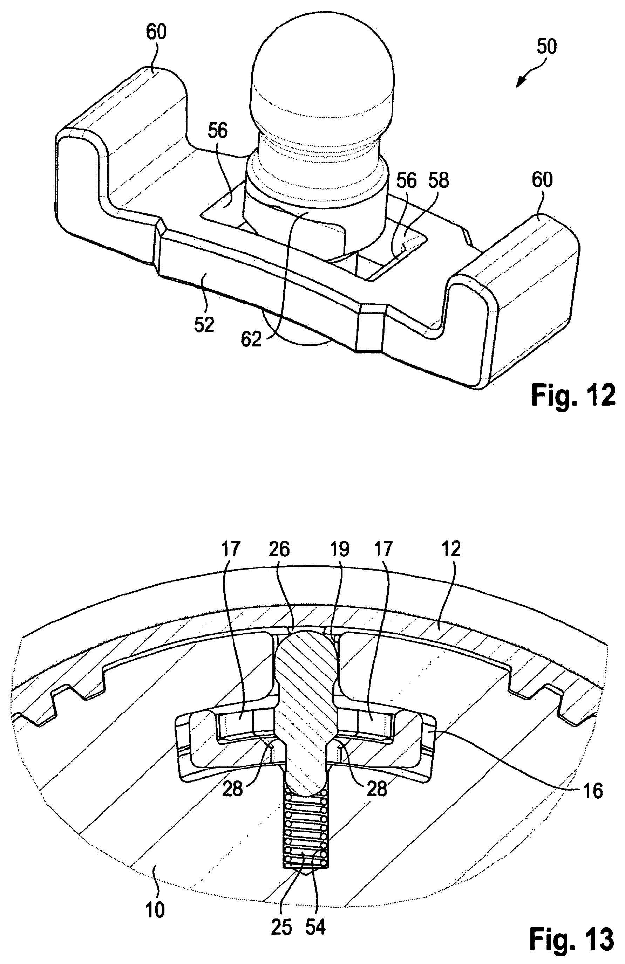

Etwas oberhalb des Fußabschnittes sind die beiden Sperrflächen 28 am Sperrbolzen 50 vorgesehen. Diese wirken mit den in Umfangsrichtung voneinander abgewandten Rändern 56 einer Aussparung 58 zusammen, die im Sperrschlitten 52 ausgebildet ist und durch die sich der Sperrbolzen 50 hindurch erstreckt. Der Sperrschlitten 52 ist allgemein länglich ausgeführt und weist an seinen in Umfangsrichtung vorne bzw. hinten liegenden Rändern abgekröpfte Anlageabschnitte 60 auf. Mit den Anlageabschnitten 60 wirken die Mitnehmer 17 der Synchronringe zusammen, wobei abweichend von der ersten und der zweiten Ausführungsform die Mitnehmer 17 bei der dritten Ausführungsform innerhalb der beiden Anlageabschnitte 60 angeordnet sind (siehe Figur 13). Der Sperrschlitten 52 liegt dabei radial innerhalb der Synchronringe 16, sodass sich ein sehr kompakter Aufbau ergibt. Lediglich die abgekröpften Anlageabschnitte 60 erstrecken sich in radialer Richtung so weit nach außen, dass sie mit den Synchronringen zusammenwirken.

Wenn die Schaltmuffe 12 ausgehend von der in Figur 11 gezeigten Neutralstellung in axialer Richtung verschoben wird, nimmt sie den Sperrbolzen 50 mit, der um seinen Fußabschnitt in der Bohrung 54 kippt. Dadurch gelangt ein Bund 62 des Sperrbolzens in Anlage am entsprechenden Synchronring 16, der in axialer Richtung gegen die zugeordnete Reibfläche des Koppelrings 14 gedrückt wird. Das resultierende Reibmoment wirkt über die Mitnehmer 17 und die Anlageabschnitte 60 auf den Sperrschlitten 52, der sich in Umfangsrichtung verschiebt und in Anlage an der entsprechenden Sperrfläche 28 gelangt. Dadurch wird die in radialer Richtung nach außen gerichtete Sperrkraft S erzeugt, die den Sperrbolzen 50 nach außen gegen die Schaltmuffe 12 drückt. Erst wenn das Reibmoment nicht mehr vorhanden ist, kann der Sperrbolzen 50 von der Schaltmuffe 12 in radialer Richtung nach innen, entgegen der Wirkung der Feder 25, gedrückt werden, da sich aufgrund der schrägen Ausrichtung der Sperrflächen 28 der Sperrschlitten 52 so in Umfangsrichtung verschieben lässt, dass die Sperrflächen 28 nach innen verstellt werden können. Die Schaltmuffe 12 kann dann in eine durchgeschaltete Position gebracht werden.

Es ist auch möglich, dass der Sperrbolzen 50 über den Sperrschlitten 52 die Synchronringe 16 in axialer Richtung beaufschlagt und gegen die ihnen zugeordnete Reibfläche 18 drückt.

Der Vorteil der dritten Ausführungsform besteht darin, dass der Verstärkungsmechanismus aus relativ wenig Einzelteilen besteht. Ferner können die Hebelverhältnisse und damit das Verstärkungsverhältnis unabhängig vom Reibdurchmesser eingestellt werden, wenn die Schaltkraft durch den Sperrschlitten 52 eingeleitet wird. Ein weiterer Vorteil besteht darin, dass der Sperrhebel universell, also ohne Änderungen, bei anderen Synchrongrößen eingebaut werden kann. Schließlich müssen an der Schaltmuffe im Vergleich zum derzeitigen Design kaum Änderungen vorgenommen werden.

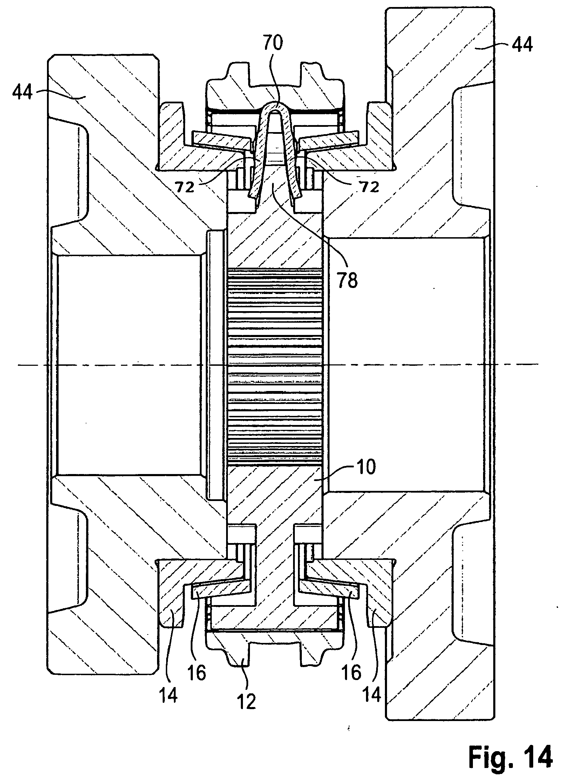

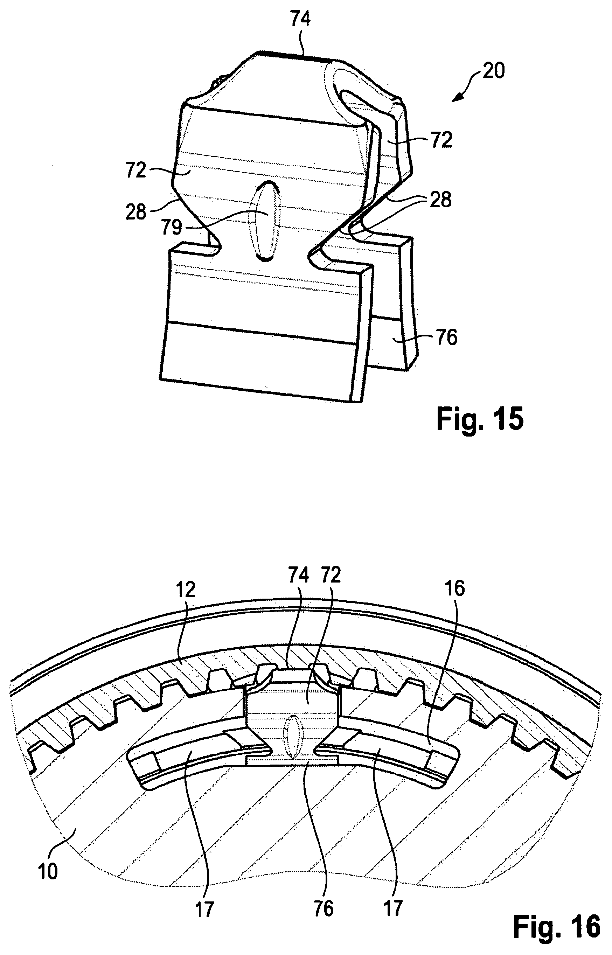

In den Figuren 14 bis 16 ist eine vierte Ausführungsform beschrieben. Für die von den vorhergehenden Ausführungsformen beschriebenen Bauteile werden dieselben Bezugszeichen verwendet, und es wird insoweit auf die obigen Erläuterungen verwiesen.

Der wesentliche Unterschied zwischen der vierten Ausführungsform und den vorhergehenden Ausführungsformen besteht darin, dass der Sperrhebel 20 einstückig ausgeführt ist und keine separate Feder benötigt. Dies ist möglich, weil der Sperrhebel als Federklammer 70 ausgeführt ist, die zwei Federschenkel 72 aufweist, die durch einen Biegeabschnitt 74 miteinander verbunden sind. Der Biegeabschnitt stützt sich in der Ausnehmung 26 der Schaltmuffe 12 ab, während jeder Federschenkel 72 mit einer Klemmfläche 76 versehen ist, die einander gegenüberliegen und sich an einem Steg 78 abstützen, der am Synchronkörper 10 vorgesehen ist. Die Klemmflächen 76 und der Steg 78 sind so ausgeführt, dass die Federschenkel 72 geringfügig gespreizt sind, wodurch eine die Federklammer 70 radial nach außen wirkende Kraft erzeugt wird.

Die Federklammer 70 ist so ausgerichtet, dass sich die Federschenkel 72 in Umfangsrichtung erstrecken. Am in Umfangsrichtung vorne bzw. hinten liegenden Rand jedes Federschenkels 72 ist eine der Sperrflächen 28 ausgebildet. Diesen gegenüber liegen die Mitnehmer 17 des Synchronrings 16. Zur Versteifung ist eine Sicke 79 vorgesehen.

Die Funktionsweise der Synchronisierung gemäß der vierten Ausführungsform entspricht im Wesentlichen derjenigen der ersten Ausführungsform. Wenn die Schaltmuffe 12 in axialer Richtung verschoben wird, nimmt sie über die Biegeabschnitt 74 den als Federklammer 70 ausgeführten Sperrhebel 20 mit, wodurch die Federklammer am entsprechenden Synchronring 16 anliegt und diesen in axialer Richtung verschiebt. Die daraus resultierende Verdrehung des entsprechenden Synchronrings in Umfangsrichtung führt dazu, dass sich einer der Mitnehmer des Synchronrings an der schräg angestellten Sperrfläche 28 des Federschenkels 72 abstützt, wodurch eine in radialer Richtung nach außen gerichtete Sperrkraft S erzeugt wird. Diese Sperrkraft verhindert, dass die Federklammer 70 radial nach innen wegtauchten kann. Dadurch wird verhindert, dass die Schaltmuffe durchgeschaltet werden kann, solange auf einen der Synchronringe 16 ein Reibmoment einwirkt.

Erst wenn das Reibmoment entfällt, kann der entsprechende Mitnehmer von der Sperrfläche 28 in Umfangsrichtung verschoben werden, wodurch der Sperrhebel 20 in radialer Richtung freigegeben ist und in radialer Richtung einwärts wegtauchen kann. Dadurch ist die Schaltmuffe 12 freigegeben, sodass sie durchgeschaltet werden kann. Beim Verschieben der Federklammer 70 radial einwärts werden über die Klemmflächen 76 die beiden Federschenkel 72 geringfügig aufgespreizt, wodurch eine in radialer Richtung nach außen wirkende Rückstellkraft erzeugt wird. Diese Rückstellkraft drückt die Federklammer 70 wieder nach außen in die in Figur 14 gezeigte Ausgangsstellung, wenn die Schaltmuffe 12 aus einem durchgeschalteten Zustand in axialer Richtung in die Neutralstellung verschoben wird.

Auch bei der vierten Ausführungsform ergibt sich eine axiale Verstärkung der auf die Schaltmuffe 12 wirkenden Schaltkraft. Zusätzlich kommt der gesamte Verstärkungsmechanismus mit sehr wenigen Einzelteilen aus, da der Sperrhebel 20 einteilig ausgeführt ist. Aufgrund des technisch einfachen Aufbaus ergibt sich ein sehr robuster Mechanismus. Außerdem ist die Montage vereinfacht, da nur sehr wenige Bauteile montiert werden müssen. Ein weiterer Vorteil besteht darin, dass der Sperrhebel 20 sowohl radial als auch axial nur sehr wenig Bauraum benötigt. Auch muss an den bisher verwendeten Schaltmuffen nur sehr wenig geändert werden, um den Sperrhebel 20 einsetzen zu können. Ein weiterer Vorteil besteht darin, dass der Sperrhebel universell ist. Er kann also unverändert in unterschiedliche Synchronisierungssysteme unterschiedlicher Baugrößen eingebaut werden. Ein weiterer Vorteil besteht darin, dass aufgrund der Abstützung des Sperrhebels 20 auf dem Steg 78 des Synchronkörpers 10 nicht mit einer Schwächung des Synchronkörpers 10 zu rechnen ist.

## Patentansprüche

1. Synchronisierung für ein Schaltgetriebe, mit einem Synchronkörper (10), der drehfest mit einer Getriebewelle verbunden werden kann, einer Schaltmuffe (12), die axial verschiebbar auf dem Synchronkörper (10) angeordnet ist und durch axiales Verschieben in Eingriff mit einer Koppelverzahnung gebracht werden kann, die einem Getrieberad zugeordnet ist, und einem Sperrhebel (20), der sich an dem Synchronkörper (10) abstützt und in die Schaltmuffe (12) eingreift,
**dadurch gekennzeichnet, dass** der Sperrhebel mit mindestens einer Sperrfläche (28) versehen ist, die eine im Wesentlichen in radialer Richtung wirkende Sperrkraft erzeugen kann.

2. Synchronisierung nach Anspruch 1, **dadurch gekennzeichnet, dass** die Sperrfläche (28) schräg zur Umfangsrichtung ausgerichtet ist.

3. Synchronisierung nach einem der vorhergehenden Ansprüche, **dadurch gekennzeichnet, dass** das in die Schaltmuffe (12) eingreifende Ende des Sperrhebels (20) radial einwärts verschiebbar ist.

4. Synchronisierung nach einem der vorhergehenden Ansprüche, **dadurch gekennzeichnet, dass** die Sperrfläche (28) in radialer Richtung einwärts verschiebbar ist, wenn keine Sperrkraft wirkt.

5. Synchronisierung nach einem der vorhergehenden Ansprüche, **dadurch gekennzeichnet, dass** der Sperrhebel (20) ein Basisteil (22), ein Kopfteil (24) und eine dazwischen angeordnete Sperrhebel-Feder (25) aufweist, die versucht, Basisteil (22) und Kopfteil (24) auseinanderzudrücken.

6. Synchronisierung nach Anspruch 5, **dadurch gekennzeichnet, dass** das Kopfteil (24) auf dem Basisteil (22) geführt ist.

7. Synchronisierung nach Anspruch 5 oder Anspruch 6, **dadurch gekennzeichnet, dass** die Sperrfläche (28) am Kopfteil (24) vorgesehen ist.

8. Synchronisierung nach einem der Ansprüche 5 bis 7, **dadurch gekennzeichnet, dass** das Kopfteil (24) ballig ausgeführt ist.

9. Synchronisierung nach einem der Ansprüche 5 bis 8, **dadurch gekennzeichnet, dass** das Basisteil (22) ballig ausgeführt ist.

10. Synchronisierung nach einem der Ansprüche 1 bis 4, **dadurch gekennzeichnet, dass** der Sperrhebel (20) einen Sperrbolzen (50) und einen Sperrschlitten (52) aufweist, wobei die Sperrfläche (28) an dem Sperrbolzen (50) vorgesehen ist.

11. Synchronisierung nach Anspruch 10, **dadurch gekennzeichnet, dass** der Sperrbolzen (50) sich durch eine Aussparung (58) im Sperrschlitten (52) hindurch erstreckt.

12. Synchronisierung nach Anspruch 10 oder Anspruch 11, **dadurch gekennzeichnet, dass** der Sperrbolzen (50) einen Fuß aufweist, der in radialer Richtung verschiebbar in dem Synchronkörper (10) aufgenommen ist, wobei eine Feder (25) vorgesehen ist, die den Fuß in radialer Richtung nach außen beaufschlagt.

13. Synchronisierung nach einem der Ansprüche 1 bis 4, **dadurch gekennzeichnet, dass** der Sperrhebel (20) als einstückige Federklammer (70) ausgebildet ist, die zwei einander gegenüberliegende Klemmflächen (76) aufweist, die sich am Synchronkörper (10) abstützen.

14. Synchronisierung nach Anspruch 13, **dadurch gekennzeichnet, dass** sich die Klemmflächen (76) an einem Steg (78) abstützen, der am Synchronkörper (10) vorgesehen ist.

15. Synchronisierung nach Anspruch 13 oder Anspruch 14, **dadurch gekennzeichnet, dass** die Federklammer (70) einen Biegeabschnitt (74) aufweist, der mit der Schaltmuffe (12) zusammenwirkt.

16. Synchronisierung nach einem der Ansprüche 13 bis 15, **dadurch gekennzeichnet, dass** die Sperrfläche (28) in radialer Richtung betrachtet zwischen dem Biegeabschnitt (74) und den Klemmflächen (76) angeordnet ist.

17. Synchronisierung nach einem der vorhergehenden Ansprüche, **dadurch gekennzeichnet, dass** mindestens ein Synchronring (16) vorgesehen ist, der mit mindestens einem Mitnehmer (17) versehen ist, der eine in Umfangsrichtung wirkende Sperrkraft bereitstellen kann.

18. Synchronisierung nach Anspruch 17, **dadurch gekennzeichnet, dass** der Synchronring (16) zwei Mitnehmer (17) aufweist, die einander in Umfangsrichtung gegenüberliegend auf der einen und der anderen Seite des Sperrhebels (20) angeordnet sind.

19. Synchronisierung nach Anspruch 17 oder Anspruch 18, **dadurch gekennzeichnet, dass** zwei Synchronringe (16) vorgesehen sind, die einander in axialer Richtung gegenüberliegend auf der einen und der anderen Seite des Synchronkörpers (10) angeordnet sind.

## Claims

1. A synchronization for a manual gearbox, comprising a synchronizer body (10) which can be connected to a gear shaft for joint rotation therewith, a shifting sleeve (12) that is arranged on the synchronizer body (10) for axial displacement and can be caused to engage in a coupling toothing by axial displacement, the coupling toothing being associated with a gearbox wheel, and a locking lever (20) which is supported at the synchronizer body (10) and engages in the shifting sleeve (12),
**characterized in that** the locking lever is provided with at least one locking surface (28) which can generate a locking force acting substantially in the radial direction.

2. The synchronization according to claim 1, **characterized in that** the locking surface (28) is oriented obliquely to the circumferential direction.

3. The synchronization according to either of the preceding claims, **characterized in that** the end of the locking lever (20) engaging in the shifting sleeve (12) is displaceable radially inwards.

4. The synchronization according to any of the preceding claims, **characterized in that** the locking surface (28) is displaceable inwards in the radial direction when no locking force acts.

5. The synchronization according to any of the preceding claims, **characterized in that** the locking lever (20) includes a base part (22), a head part (24), and a locking lever spring (25) which is arranged in between and seeks to push the base part (22) and the head part (24) apart.

6. The synchronization according to claim 5, **characterized in that** the head part (24) is guided on the base part (22).

7. The synchronization according to claim 5 or claim 6, **characterized in that** the locking surface (28) is provided on the head part (24).

8. The synchronization according to any of claims 5 to 7, **characterized in that** the head part (24) has a crowned configuration.

9. The synchronization according to any of claims 5 to 8, **characterized in that** the base part (22) has a crowned configuration.

10. The synchronization according to any of claims 1 to 4, **characterized in that** the locking lever (20) includes a locking bolt (50) and a locking slide (52), the locking surface (28) being provided on the locking bolt (50).

11. The synchronization according to claim 10, **characterized in that** the locking bolt (50) extends through a recess (58) in the locking slide (52).

12. The synchronization according to claim 10 or claim 11, **characterized in that** the locking bolt (50) includes a foot which is received in the synchronizer body (10) for displacement in the radial direction, a spring (25) being provided which urges the foot radially outward.

13. The synchronization according to any of claims 1 to 4, **characterized in that** the locking lever (20) is formed as a one-piece spring clip (70) which includes two clamping surfaces (76) which are located opposite each other and are supported at the synchronizer body (10).

14. The synchronization according to claim 13, **characterized in that** the clamping surfaces (76) are supported at a web (78) which is provided on the synchronizer body (10).

15. The synchronization according to claim 13 or claim 14, **characterized in that** the spring clip (70) includes a bending section (74) which cooperates with the shifting sleeve (12).

16. The synchronization according to any of claims 13 to 15, **characterized in that** the locking surface (28), as viewed in the radial direction, is arranged between the bending section (74) and the clamping surfaces (76).

17. The synchronization according to any of the preceding claims, **characterized in that** at least one synchronizer ring (16) is provided which is provided with at least one entrainment means (17) which can provide a locking force acting in the circumferential direction.

18. The synchronization according to claim 17, **characterized in that** the synchronizer ring (16) includes two entrainment means (17) which are arranged on either side of the locking lever (20) so as to be located opposite each other in the circumferential direction.

19. The synchronization according to claim 17 or claim 18, **characterized in that** two synchronizer rings (16) are provided, which are arranged on either side of the synchronizer body (10) so as to be located opposite each other in the axial direction.

## Revendications

1. Synchronisation pour boîte de vitesses, comportant un corps de synchronisation (10) qui peut être relié de manière solidaire en rotation à un arbre de transmission, un manchon coulissant (12) qui est agencé de manière axialement déplaçable sur le corps de synchronisation (10) et qui, par un déplacement axial, peut être amené en engagement avec une denture de couplage associée à une roue de transmission, et un levier de verrouillage (20) qui prend appui sur le corps de synchronisation (10) et qui s'engage dans le manchon coulissant (12),
**caractérisée en ce que** le levier de verrouillage est pourvu d'au moins une surface de verrouillage (28) qui peut produire une force de verrouillage agissant sensiblement dans le sens radial.

2. Synchronisation selon la revendication 1, **caractérisée en ce que** la surface de verrouillage (28) est orientée en oblique par rapport au sens périphérique.

3. Synchronisation selon l'une des revendications précédentes, **caractérisée en ce que** l'extrémité du levier de verrouillage (20) qui s'engage dans le manchon coulissant (12) est déplaçable radialement vers l'intérieur.

4. Synchronisation selon l'une des revendications précédentes, **caractérisée en ce que** la surface de verrouillage (28) est déplaçable dans le sens radial vers l'intérieur lorsqu'aucune force de verrouillage agit.

5. Synchronisation selon l'une des revendications précédentes, **caractérisée en ce que** le levier de verrouillage (20) présente une pièce de base (22), une pièce de tête (24) et un ressort (25) de levier de verrouillage qui est agencé entre celles-ci et qui tente d'écarter la pièce de base (22) et la pièce de tête (24) l'une de l'autre.

6. Synchronisation selon la revendication 5, **caractérisée en ce que** la pièce de tête (24) est guidée sur la pièce de base (22).

7. Synchronisation selon la revendication 5 ou la revendication 6, **caractérisée en ce que** la surface de verrouillage (28) est prévue sur la pièce de tête (24).

8. Synchronisation selon l'une des revendications 5 à 7, **caractérisée en ce que** la pièce de tête (24) est réalisée de manière bombée.

9. Synchronisation selon l'une des revendications 5 à 8, **caractérisée en ce que** la pièce de base (22) est réalisée de manière bombée.

10. Synchronisation selon l'une des revendications 1 à 4, **caractérisée en ce que** le levier de verrouillage (20) présente un boulon de verrouillage (50) et un chariot de verrouillage (52), la surface de verrouillage (28) étant prévue sur le boulon de verrouillage (50).

11. Synchronisation selon la revendication 10, **caractérisée en ce que** le boulon de verrouillage (50) s'étend à travers un évidement (58) dans le chariot de verrouillage (52).

12. Synchronisation selon la revendication 10 ou la revendication 11, **caractérisée en ce que** le boulon de verrouillage (50) présente un pied qui est reçu déplaçable dans le sens radial dans le corps de synchronisation (10), un ressort (25) sollicitant le pied dans le sens radial vers l'extérieur étant prévu.

13. Synchronisation selon l'une des revendications 1 à 4, **caractérisée en ce que** le levier de verrouillage (20) est réalisé sous forme de bride ressort (70) en une seule pièce qui présente deux surfaces de serrage (76) opposées l'une à l'autre et prenant appui sur le corps de synchronisation (10).

14. Synchronisation selon la revendication 13, **caractérisée en ce que** les surfaces de serrage (76) prennent appui sur une barrette (78) prévue sur le corps de synchronisation (10).

15. Synchronisation selon la revendication 13 ou la revendication 14, **caractérisée en ce que** la bride ressort (70) présente un tronçon de flexion (74) coopérant avec le manchon coulissant (12).

16. Synchronisation selon l'une des revendications 13 à 15, **caractérisée en ce que** la surface de verrouillage (28), vue dans le sens radial, est agencée entre le tronçon de flexion (74) et les surfaces de serrage (76).

17. Synchronisation selon l'une des revendications précédentes, **caractérisée en ce qu'**il est prévu au moins un anneau de synchronisation (16) qui est pourvu d'au moins un entraîneur (17) apte à fournir une force de verrouillage agissant dans le sens périphérique.

18. Synchronisation selon la revendication 17, **caractérisée en ce que** l'anneau de synchronisation (16) présente deux entraîneurs (17) qui sont agencés de part et d'autre du levier de verrouillage (20) de manière à être opposés l'un à l'autre dans le sens périphérique.

19. Synchronisation selon la revendication 17 ou la revendication 18, **caractérisée en ce qu'**il est prévu deux anneaux de synchronisation (16) qui sont agencés de part et d'autre du corps de synchronisation (10) de manière à être opposés l'un à l'autre dans le sens axial.
